# EUROPÄISCHE PATENTSCHRIFT

(11) **EP 3 964 394 B1**
(45) Veröffentlichungstag und Bekanntmachung des Hinweises auf die Patenterteilung: **13.03.2024**
(21) Anmeldenummer: 21193266.0
(22) Anmeldetag: 26.08.2021
(51) Int. Cl.: B60Q 1/12, G06N 3/08

(54) **VERFAHREN ZUM AUTOMATISCHEN OPTIMIEREN EINER PRÄDIKTIVEN DYNAMISCHEN KURVENLICHTFUNKTION EINES BELEUCHTUNGSSYSTEMS EINES FAHRZEUGS, BELEUCHTUNGSSYSTEM, FAHRZEUG UND COMPUTERPROGRAMMPRODUKT**
METHOD FOR AUTOMATICALLY OPTIMIZING A PREDICTIVE DYNAMIC CORNERING LIGHT FUNCTION OF A LIGHTING SYSTEM OF A VEHICLE, LIGHTING SYSTEM, VEHICLE AND COMPUTER PROGRAM PRODUCT
PROCÉDÉ D'OPTIMISATION AUTOMATIQUE D'UNE FONCTION D'ÉCLAIRAGE EN VIRAGE DYNAMIQUE ET PRÉDICTIVE D'UN SYSTÈME D'ÉCLAIRAGE D'UN VÉHICULE, SYSTÈME D'ÉCLAIRAGE, VÉHICULE ET PRODUIT PROGRAMME INFORMATIQUE

(30) Priorität: 07.09.2020 DE 102020211190
(43) Veröffentlichungstag der Anmeldung: 09.03.2022
(73) Patentinhaber: Ford Global Technologies, LLC, Dearborn, MI 48126 (US)
(72) Erfinder: Spychala, Aleksander, 50858 Köln (DE); Erber, Thomas, 50737 Köln (DE); Golumba, Janos, 50354 Hürth (DE); Junker, Lars, 50733 Köln (DE)
(74) Vertreter: Markowitz, Markus

(56) Entgegenhaltungen:
- WO-A1-2018/087941
- CN-A- 108 312 957
- DE-A1-102016 110 618
- DE-A1-102018 219 290

## Beschreibung

Die vorliegende Erfindung betrifft ein Verfahren zum automatischen Optimieren einer prädiktiven dynamischen Kurvenlichtfunktion eines Beleuchtungssystems eines Fahrzeugs, ein Beleuchtungssystem für ein Fahrzeug, mit automatisch selbst optimierender prädiktiver dynamischer Kurvenlichtfunktion, mit dem das Verfahren ausgeführt werden kann, und ein Fahrzeug, das ein derartiges Beleuchtungssystem aufweist. Zudem betrifft die Erfindung ein zum Betrieb des Beleuchtungssystems geeignetes Com puterprogram m produkt.

Dynamisches Kurvenlicht ist eine Fahrzeug-Assistenzfunktion, bei der die Leuchtrichtung, d. h. die Richtung, in die von den Frontscheinwerfern eines Fahrzeugs Licht abgestrahlt wird, dynamisch in Abhängigkeit vom Kurvenverlauf der befahrenen Fahrbahn verändert wird, um die gefahrene Kurve besser auszuleuchten. Prädiktives dynamisches Kurvenlicht (PDBL - Predictive Dynamic Bending Light) sieht vor, die Leuchtrichtung nicht lediglich nachzuführen, sondern durch Auswertung von den Fahrtverlauf charakterisierenden Sensorsignalen, z. B. Videoaufnahmen einer Frontkamera, und weiterer Fahrtverlaufsparameterwerte wie dem Verlauf des Lenkwinkels des Lenkrades des Fahrzeugs sowie anderer z. B. über den CAN-Bus des Fahrzeugs als Fahrtverlaufsparameterwerte bereitgestellter Sensorsignale, beispielsweise der Fahrzeuggeschwindigkeit, der Gierrate, des eingelegten Ganges, des Zustands des Fahrtrichtungsanzeigers, vorausschauend noch vor der Reaktion des Fahrers so anzupassen, dass die Fahrbahn auch in Kurvenfahrten jederzeit möglichst geeignet ausgeleuchtet wird. Fahrzeugzustandsparameterwerte wie die Geschwindigkeit, während der Fahrt sind dabei ebenso Fahrtverlaufsparameterwerte wie der in Videoaufnahmen detektierte Verlauf der Fahrbahn oder andere im Fahrzeug verfügbare Informationen, die den Fahrtverlauf charakterisieren.

Wie gut das Leistungsverhalten, d. h. die Performanz, des Beleuchtungssystems des Fahrzeugs, bei dem die Leuchtrichtung der Fahrzeugscheinwerfer von einer PDBL-Steuereinheit, d. h. einer Kurvenlicht-Steuereinheit, gesteuert wird, tatsächlich ist, d. h. wie genau die erzielte Ausleuchtung der Fahrbahn über eine Abfolge von Zeitabschnitten einer am besten geeigneten Ausleuchtung entspricht, hängt dabei von der Qualität der Anpassung der Steuerung durch die PDBL-Steuereinheit an die realen Fahrsituationen ab. Hierzu können Werte für Steuerparameter der PDBL-Steuereinheit, d. h. Kurvenlicht-Steuerparameterwerte, beispielsweise ermittelt werden, indem aufgezeichnete Testfahrtdaten verwendet werden, um damit anhand eines Modells der PDBL-Steuereinheit zu testen, wie die PDBL-Steuereinheit sich verhalten würde, wobei ein Testleiter je nach erzieltem Ergebnis Kurvenlicht-Steuerparameterwerte, beispielsweise spezifische Entscheidungsschwellenwerte, Umschaltgeschwindigkeiten zwischen Steuerzuständen, Filterempfindlichkeiten usw., verändert, um das Ergebnis zu verbessern. Eine mit den so ermittelten Kurvenlicht-Steuerparameterwerten initialisierte, d. h. voreingestellte PDBL-Steuereinheit bzw. deren Modell bereitgestellt über eine Rapid Control Prototyping Plattform kann dann auch in realen Testfahrten getestet werden. Ein solches Vorgehen erfordert allerdings einschließlich der Vorbereitung und Datenauswertung einen erheblichen Aufwand an Zeit und Ressourcen.

Zudem hängt das reale Leistungsverhalten, d. h. die tatsächliche Performanz, des Beleuchtungssystems des Fahrzeugs, bei dem die Leuchtrichtung der Fahrzeugscheinwerfer von einer PDBL-Steuereinheit gesteuert wird, ebenfalls stark beispielsweise vom Zustand der Fahrbahn, den sich dynamisch ändernden Fahr- bzw. Verkehrssituationen, in denen das jeweilige Fahrzeug betrieben wird, sowie dem individuellen Fahrstil des Fahrers des Fahrzeugs ab. Eine Optimierung des Leistungsverhaltens, d. h. wie gut der Verlauf der Fahrbahnausleuchtung einer ideal geeigneten Ausleuchtung angenähert werden kann, sollte daher die realen, individuellen Nutzungsbedingungen des jeweiligen Fahrzeugs berücksichtigen.

In der CN110588499A wird ein auf maschinellem Sehen basierendes adaptives Steuersystem zum Steuern von Fahrzeugscheinwerfern gezeigt, bei dem in Videobildern Lichtquellen, insbesondere Scheinwerfer anderer Verkehrsteilnehmer, lokalisiert werden, wobei mit Hilfe einer anhand von Trainingsdaten trainierten Support Vector Machine entschieden wird, wie die eigenen Scheinwerfer ausgerichtet werden, um eine Störung der anderen Verkehrsteilnehmer zu vermeiden.

In der CN108216009A wird eine prädiktive Kurvenlichtsteuerung beschrieben, die anhand von GPS-Daten und Karteninformationen sowie Lenkwinkel- und Geschwindigkeitsinformationen die Ausrichtung der Scheinwerfer steuert.

In der CN108312957A wird ein prädiktives Kurvenlicht-System für ein Fahrzeug beschrieben, bei dem basierend auf der Fahrzeuggeschwindigkeit und Videoinformationen über die Fahrbahn der Kurvenradius und die Entfernung zur Kurve ermittelt werden und ein mit Testdaten trainiertes neuronales Netz einen Rotationswinkel der Fahrscheinwerfer bestimmt, mit dem die Fahrscheinwerfer vorausschauend ausgerichtet werden.

Der vorliegenden Erfindung liegt die Aufgabe zugrunde, das Verhalten einer prädiktiven dynamischen Kurvenlichtfunktion eines Beleuchtungssystems eines Fahrzeugs auf einfache und schnelle Weise unter den individuellen Betriebsumständen des jeweiligen Fahrzeugs zu optimieren.

Diese Aufgabe wird erfindungsgemäß mit einem Verfahren zum automatischen Optimieren einer prädiktiven dynamischen Kurvenlichtfunktion eines Beleuchtungssystems eines Fahrzeugs gemäß Anspruch 1, einem Beleuchtungssystem für ein Fahrzeug, mit automatisch selbst optimierender prädiktiver dynamischer Kurvenlichtfunktion gemäß Anspruch 12, einem Fahrzeug gemäß Anspruch 14 sowie einem Computerprogrammprodukt gemäß Anspruch 15 gelöst. Vorteilhafte Weiterbildungen der Erfindung sind in den Unteransprüchen angegeben.

Gemäß einem ersten Aspekt der Erfindung umfasst ein Verfahren zum automatischen Optimieren einer prädiktiven dynamischen Kurvenlichtfunktion eines Beleuchtungssystems eines Fahrzeugs einen Schritt des Einrichtens einer Kurvenlicht-Steuereinheit zum Steuern eines Beleuchtungssystems des Fahrzeugs, mit initialen Kurvenlicht-Steuerparameterwerten als zu verwendende Kurvenlicht-Steuerparameterwerte, einen Schritt des Einrichtens einer (mit der Kurvenlicht-Steuereinheit verbundenen) Klassifizierungseinheit zum automatischen Klassifizieren eines Leistungsverhaltens der Kurvenlicht-Steuereinheit in eine gewünschte Leistungsverhaltensklasse, d. h. eine Ziel-Leistungsverhaltensklasse, und mindestens eine weitere Leistungsverhaltensklasse, d. h. mindestens eine Fehler-Leistungsverhaltensklasse, in Abhängigkeit von Ausgabewerten der Kurvenlicht-Steuereinheit sowie einen Schritt des Einrichtens einer (mit der Kurvenlicht-Steuereinheit und der Klassifizierungseinheit verbundenen) Steuerparameter-Optimierungseinheit zum Ermitteln von aktualisierten Kurvenlicht-Steuerparameterwerten in Abhängigkeit von Eingangswerten der Kurvenlicht-Steuereinheit und den Eingangswerten zugeordneten Klassifizierungen des Leistungsverhaltens der Kurvenlicht-Steuereinheit.

Zudem umfasst das Verfahren einen Schritt des Erfassens von Fahrtverlaufsparameterwerten als die Eingangswerte der Kurvenlicht-Steuereinheit während mindestens einer Fahrt des Fahrzeugs, Schritte des Ermittelns von Ausgabewerten der Kurvenlicht-Steuereinheit und des automatisches Klassifizierens des Leistungsverhaltens der Kurvenlicht-Steuereinheit in Abhängigkeit von den ermittelten Ausgabewerten während der mindestens einen Fahrt sowie Schritte des Ermittelns von aktualisierten Kurvenlicht-Steuerparameterwerten und des Anpassens der zu verwendenden Kurvenlicht-Steuerparameterwerte an die aktualisierten Kurvenlicht-Steuerparameterwerte.

Es ist vorgesehen, dass das Ermitteln von aktualisierten Kurvenlicht-Steuerparameterwerten umfasst, einen genetischen Algorithmus anzuwenden, mit dem eine Häufigkeit einer Klassifizierung des Leistungsverhaltens der Kurvenlicht-Steuereinheit in der gewünschten Leistungsverhaltensklasse vergrößert wird. Dies umfasst, dass eine Häufigkeit der Klassifizierung in die mindestens eine weitere Klasse (in der nicht korrekte, also fehlerhafte, Klassifizierungen erfasst werden) vermindert wird.

Das Beleuchtungssystem oder Fahrtlichtsystem des Fahrzeugs umfasst zumindest einen oder mehrere Fahrscheinwerfer. Die Kurvenlichtfunktion des Beleuchtungssystems bezeichnet dessen Funktionalität, die Beleuchtungsausrichtung, d. h. die Leuchtrichtung, der Fahrscheinwerfer in Abhängigkeit vom Kurvenverlauf zu verändern. Hierzu sind die Fahrscheinwerfer beispielsweise drehbar gelagert und mit Motoren verbunden, die von der Kurvenlicht-Steuereinheit Steuersignale erhalten, um die Fahrscheinwerfer zu drehen, um die Leuchtrichtung anzupassen. In einer weiteren beispielhaften Ausführungsform umfassen die Fahrscheinwerfer ein Matrixsystem aus einer Mehrzahl von LEDs sowie eine zugehörige Steuerung, um die Leuchtrichtung durch angepasstes Aktivieren und Deaktivieren von LEDs in angesteuerten Segmenten des Matrixsystems zu ändern. Die Kurvenlicht-Steuereinheit ist eine PDBL-Steuereinheit und kann beispielsweise als von einer programmierbaren Einrichtung, z. B. einem Mikrocontroller oder anderen Prozessor mit Speicher, ausgeführtes Modul realisiert sein.

Die initialen Kurvenlicht-Steuerparameterwerte sind gespeichert vorliegende Startwerte, die beispielsweise anhand von früheren Testfahrtdaten ermittelt wurden. Die zu verwendenden Kurvenlicht-Steuerparameterwerte sind die, die die Kurvenlicht-Steuereinheit tatsächlich aktuell zur Steuerung verwendet. Anfänglich sind dies die initialen Kurvenlicht-Steuerparameterwerte. Später werden diese von der Steuerparameter-Optimierungseinheit an die ermittelten aktualisierten Kurvenlicht-Steuerparameterwerte angepasst, d. h. durch diese ersetzt.

Die Klassifizierungseinheit empfängt die Ausgabewerte der Kurvenlicht-Steuereinheit, die den Steuersignalen, mit denen die Leuchtrichtungen der Fahrscheinwerfer gesteuert werden, entsprechen oder diese charakterisieren. Diese werden von der Klassifizierungseinheit im Kontext der Fahrsituation bewertet, d. h. einer der vordefinierten Leistungsverhaltensklassen zugeordnet. Hierzu ist die Klassifizierungseinheit als Modul ausgebildet, das einen künstliche-Intelligenz-Algorithmus anwendet, beispielsweise basierend auf einem in einer Trainingsphase trainierten künstlichen neuronalen Netz, wobei die Klassifizierung der Ausgabewerte von Experten verifiziert wurde. In einer anderen beispielhaften Ausführungsform verwendet die Klassifizierungseinheit Boosted Random Forest Ensembles. Vorzugsweise ist auch die Klassifizierungseinheit als von einer programmierbaren Einrichtung ausgeführtes Modul ausgeführt. Je nach Ausführungsform befindet sich die programmierbare Einrichtung dauerhaft an Bord des Fahrzeugs oder zumindest während der Durchführung von realen Testfahrten. In diesem Fall kann es sich z. B. auch um einen Teil eines mit dem Fahrzeugbus verbundenen tragbaren Computers handeln. Klassifiziert wird das Leistungsverhalten fortlaufend jeweils für bestimmte Abschnitte, beispielsweise über regelmäßige Zeitabschnitte während der Fahrt oder zumindest während relevanter Fahrtabschnitte, d. h. während des Durchfahrens von Kurven. Die Klassifizierung des Leistungsverhaltens ist beispielsweise zu verstehen pro Zeiteinheit oder pro Reaktion der Kurvenlicht-Steuereinheit oder pro Testfahrt oder pro Kurve oder pro Messwert. In einer Ausführungsform ist es vorgesehen, die Klassifizierungen in einer Datenbank zu speichern bzw. auszugeben, z. B. in Tabellenform oder einem anderen Datenformat, um Datensätze aus den Eingangs- und Ausgabewerten der Kurvenlicht-Steuereinheit über Zeitabschnitte und die zugeordneten Leistungsverhaltensklassen in einer Trainingsphase der Klassifizierungseinheit verfügbar zu haben.

Die Steuerparameter-Optimierungseinheit empfängt die Ausgabewerte der Kurvenlicht-Steuereinheit und die zugehörigen Klassifizierungen der Klassifizierungseinheit sowie die Fahrtverlaufsparameterwerte, d. h. die Eingangswerte der Kurvenlicht-Steuereinheit, und berechnet aktualisierte Kurvenlicht-Steuerparameterwerte, wobei als Gütekriterium z. B. die optimierte Zuordnung des Leistungsverhaltens zu der gewünschten Leistungsverhaltensklasse und/oder eine Optimierung des Verhältnisses der Anzahl der Zuordnungen zu der gewünschten Leistungsverhaltensklasse zu der Anzahl der Zuordnungen zu den weiteren Leistungsverhaltensklassen (d. h. die Anzahl der korrekten Reaktionen der Kurvenlicht-Steuereinheit im Verhältnis zu den nicht korrekten Reaktionen) angewendet wird. Vorzugsweise ist auch die Steuerparameter-Optimierungseinheit als von einer programmierbaren Einrichtung ausgeführtes Modul ausgeführt.

Das beschriebene Verfahren ist vorzugsweise somit ein zumindest teilweise computerimplementiertes Verfahren, d. h. ein Verfahren, das zumindest teilweise von einem Prozessor einer programmierbaren Einrichtung ausgeführt wird.

Das Verfahren wird ganz oder teilweise während mindestens einer Fahrt des Fahrzeugs ausgeführt. Dabei kann es sich um eine Testfahrt auf einer besonders geeigneten Teststrecke oder um den normalen Fahrbetrieb handeln. Die Fahrt kann auch eine simulierte Testfahrt sein, bei der statt während einer aktuellen Fahrt neu generierte Fahrtverlaufsparameterwerte gespeicherte Fahrtverlaufsparameterwerte einer früheren Fahrt erfasst werden.

Mit dem beschriebenen Verfahren wird das Verhalten der prädiktiven dynamischen Kurvenlichtfunktion des Beleuchtungssystems optimiert, wobei die Optimierung zumindest auch anhand aktueller Fahrtverlaufsparameterwerte erfolgt, die individuell dadurch bestimmt sind, wie der jeweilige Fahrer das Fahrzeug auf selbstgewählten Fahrstrecken steuert. Dabei erfolgt die Beurteilung des aktuellen Leistungsverhaltens der Kurvenlicht-Steuereinheit, d. h. der PDBL-Steuereinheit, automatisch durch eine trainierte Klassifizierungseinheit, insbesondere realisiert als KI-Einheit (KI - künstliche Intelligenz), ohne dass die Klassifizierungen nach der Trainingsphase noch durch einen Menschen beurteilt werden müssten. Das System ist somit nicht auf die nur zeitweise verfügbare Aufsicht eines Menschen angewiesen, sondern kann nicht nur jede Testfahrt, sondern auch den normalen Fahrbetrieb zur weiteren Optimierung der Steuerparameterwerte der Kurvenlicht-Steuereinheit nutzen, wobei immer eine objektive, konsistente und reproduzierbare Klassifizierung erfolgt, so dass auch die Ermittlung von optimierten aktualisierten Kurvenlicht-Steuerparameterwerten für die Kurvenlicht-Steuereinheit nicht auf subjektiven Beurteilungen von visuellen Eindrücken basiert und zudem automatisiert sehr schnell erfolgen kann. Der genetische Algorithmus ermöglicht es zudem, zur Optimierung eine Vielzahl von Kombinationen von Kurvenlicht-Steuerparameterwerten in kurzer Zeit zu berücksichtigen.

In einer Ausführungsform umfasst das Verfahren, dass das Ermitteln von aktualisierten Kurvenlicht-Steuerparameterwerten und das Anpassen der zu verwendenden Kurvenlicht-Steuerparameterwerte an die aktualisierten Kurvenlicht-Steuerparameterwerte während der mindestens einen Fahrt erfolgt. So kann eine fortlaufende Selbstoptimierung des Leistungsverhaltens der Kurvenlicht-Steuerfunktion erfolgen, angepasst an die Fahrstrecken des Fahrzeugs und den individuellen Fahrstil des jeweiligen Fahrers.

In einer weiteren Ausführungsform erfolgt das Ermitteln von aktualisierten Kurvenlicht-Steuerparameterwerten und das Anpassen der zu verwendenden Kurvenlicht-Steuerparameterwerte an die aktualisierten Kurvenlicht-Steuerparameterwerte nach Beendigung von einer oder mehreren (realen und/oder simulierten) Testfahrten. So kann beispielsweise die Optimierung von einer Steuerparameter-Optimierungseinheit ausgeführt werden, die sich nicht an Bord des Fahrzeugs befindet, so dass auch ggf. wesentlich leistungsfähigere Computer oder auch Cluster von Computern bzw. Prozessoren eingesetzt werden können, um auch sehr komplexe Optimierungsmodelle schnell berechnen zu können.

In einer Ausführungsform des Verfahrens umfasst das Ermitteln von aktualisierten Kurvenlicht-Steuerparameterwerten ein Durchführen einer Metamodellierung der automatischen Klassifizierung in Abhängigkeit von den zu verwendenden (d. h. den zurzeit aktuellen) Kurvenlicht-Steuerparameterwerten und gespeicherten früheren zu verwendenden Kurvenlicht-Steuerparameterwerten, um eine multidimensionale Optimierung unter Verwendung des genetischen Algorithmus durchführen zu können. Die gespeicherten früheren zu verwendenden Kurvenlicht-Steuerparameterwerte sind dabei bei vorangegangenen Iterationen der Ermittlung von aktualisierten Kurvenlicht-Steuerparameterwerten basierend auf Klassifizierungen anhand von Ausgabewerten der Kurvenlicht-Steuereinheit von früheren Zeitabschnitten der aktuell durchgeführten Fahrt und/oder während vorangegangener Fahrten desselben oder eines anderen Fahrzeugs ermittelt worden. Zumindest wenn auf diese Weise noch keine früheren zu verwendenden Kurvenlicht-Steuerparameterwerte ermittelt wurden, können beispielsweise zufällige oder vorzugsweise z. B. unter Verwendung des Latin Hypercube Stichprobenverfahrens als geeignet ermittelte Kurvenlicht-Steuerparameterwerte als frühere zu verwendende Kurvenlicht-Steuerparameterwerte aus dem Parameterraum ausgewählt werden. Zur Metamodellierung wird in einer beispielhaften Ausführungsform dabei eine Gauss-Prozess-Regression mit automatischer Relevanzermittlung verwendet. Zusätzlich kann vorgesehen sein, dass gespeicherte Testfahrtdaten aus einer Datenbank für die Metamodellierung verwendet werden. Zunächst werden für ausgewählte Untergruppen von Kurvenlicht-Steuerparametern Ausgabewerte erzeugt, beispielsweise unter Verwendung von Latin Hypercube Stichproben. Für diese erfolgt dann die Metamodellierung, bei der mögliche Modelle erzeugt werden, die den Zusammenhang zwischen den Kurvenlicht-Steuerparameterwerten und den zugehörigen Klassifikationen des Leistungsverhaltens herstellen. Auf diese Weise kann eine nur durch die verfügbare Rechenleistung begrenzte Anzahl von möglichen Kurvenlicht-Steuerparameterwert-Sätzen in sehr vielen Kombinationen für eine multidimensionale Optimierung analysiert werden.

In einer beispielhaften Ausführungsform umfasst das Anwenden des genetischen Algorithmus, eine globale Optimierung mit einem nichtdominierten genetischen Sortieralgorithmus unter Verwendung von mit der Metamodellierung erzeugten Modellen durchzuführen. In einer bevorzugten Ausführungsform wird dabei der NSGA II - Algorithmus (NSGA II - non-dominated sorting genetic algorithm II) verwendet, um eine multikriterielle Optimierung mit variierten möglichen Kurvenlicht-Steuerparameterwerten durchzuführen und aktualisierte Kurvenlicht-Steuerparameterwerte zu ermitteln, mit denen das Leistungsverhalten der Kurvenlicht-Steuereinheit verbessert wird. Zudem liefert das bevorzugte Metamodellierungsverfahren eine Information über die Relevanz der jeweiligen berücksichtigten Kurvenlicht-Parameter. Daher beinhaltet das Verfahren in einer Ausführungsform eine Reduktion der Anzahl der zur Optimierung berücksichtigten Kurvenlicht-Steuerparameter um die Parameter, deren Relevanz unterhalb eines zugehörigen Schwellenwertes liegt. So kann die Optimierung weiter beschleunigt werden. Zudem ist in einer Ausführungsform vorgesehen, die Relevanz der verschiedenen Kurvenlicht-Steuerparameter als deren Ungleichverteilung in einem mit einem Diagramm, z. B. einem Pareto-Diagramm, darstellbaren Datensatz auszugeben, um eine Überprüfung und Vergleiche durch Benutzer, z. B. Entwicklungsingenieure, zu ermöglichen. Außerdem ist in einer Ausführungsform vorgesehen, Datensätze von ermittelten aktualisierten Kurvenlicht-Steuerparameterwerten zu speichern, so dass diese später als individuell optimierte initiale Kurvenlicht-Steuerparameter zur Verfügung stehen.

In einer weiteren Ausführungsform des Verfahrens umfasst das automatische Klassifizieren ein Verwenden eines trainierten künstlichen neuronalen Netzes. Dabei ist das künstliche neuronale Netz trainiert, anhand von Sätzen von Ausgabewerten der Kurvenlicht-Steuereinheit das Leistungsverhalten der Kurvenlicht-Steuereinheit über der Zeit zu klassifizieren und jeweils der gewünschten oder der mindestens einen weiteren Leistungsverhaltensklassen zuzuordnen. Dabei ist in der Trainingsphase ein Training des künstlichen neuronalen Netzes basierend auf Testfahrtdaten und Verifizierung der Klassifizierungen durch Experten erfolgt.

In einer beispielhaften Ausführungsform wird das künstliche neuronale Netz in einer Trainingsphase mit einem Maschinenlernverfahren trainiert, das zumindest Werte einer Fahrgeschwindigkeit des Fahrzeugs, eines Lenkwinkels des Lenkrads des Fahrzeugs und einer Ausrichtung, d. h. Leuchtrichtung, von Fahrscheinwerfern des Fahrzeugs auswertet. Zudem kann ein Betriebszustand der Kurvenlicht-Steuereinheit ausgewertet werden. Des Weiteren kann beispielsweise auch der Betriebszustand eines Fahrtrichtungsanzeigers und der anliegende Gang berücksichtigt werden. Das Auswerten umfasst dabei auch, die Dynamik der Eingangssignale, d. h. der Fahrtverlaufsparameterwerte, über einen Zeitabschnitt zu ermitteln. Hierfür erfolgt z. B. ein Zwischenspeichern von Fahrtverlaufsparameterwerten in einem Speicher. Da insbesondere auch ein Training ohne Auswertung von Kamerasignalen möglich ist, kann der Rechenaufwand erheblich reduziert werden.

Dabei werden in einer Ausführungsform in der Trainingsphase Testfahrtdaten sowie zugehörige manuelle Klassifizierungen des Leistungsverhaltens durch Experten ausgewertet.

In einer bevorzugten Ausführungsform verwendet das Maschinenlernverfahren für jede der Leistungsverhaltensklassen der Klassifizierungseinheit ein zugeordnetes Maschinenlernmodell. Vorzugsweise werden Boosted Decision Tree-Modelle, d. h. Entscheidungsbaummodelle mit Gradientenboosting verwendet, eines für jede Leistungsverhaltensklasse, wobei die ggf. vorverarbeiteten Fahrtverlaufsparameterwerte dazu verwendet werden, zu überprüfen, ob in dem zugehörigen Zeitabschnitt ein Leistungsverhalten erzeugt wird, das zu einer der Leistungsverhaltensklassen zugeordnet werden kann.

In einer Ausführungsform des Verfahrens betrifft die gewünschte Klasse eine korrekte Reaktion der Kurvenlicht-Steuereinheit und die mindestens eine weitere Klasse umfasst eine erste und eine zweite weitere Klasse, wobei die erste weitere Klasse eine verzögerte Reaktion der Kurvenlicht-Steuereinheit und die zweite weitere Klasse eine instabile Reaktion der Kurvenlicht-Steuereinheit betreffen.

In einer Ausführungsform umfasst das automatische Klassifizieren, dem jeweils klassifizierten Leistungsverhalten außerdem ein Vertrauensniveau zuzuordnen. Hierzu können die einzelnen Klassifikationen über einen Zeitraum aufsummiert werden, um finale Entscheidungen über die Klassifikation zu treffen und dieser dann ein Vertrauensniveau zuzuordnen. Ist jeder der Klassen ein Maschinenlernmodell zugeordnet, z. B. jeweils ein Boosted Decision Tree-Modell, kann für jedes der Maschinenlernmodelle ein Vertrauensniveau anhand einer Gesamtzahl von Reaktionen in der jeweiligen Klasse zugeordnet werden.

Ist eine Fahrt beendet, kann für diese außerdem insgesamt eine Bewertung des Leistungsverhaltens ermittelt werden, für die die Anzahl der korrekten, der verzögerten und der instabilen Reaktionen der Kurvenlicht-Steuereinheit und optional auch die Gesamtzeit, in der die Kurvenlicht-Steuereinheit aktiv war, berücksichtigt werden. In einer Ausführungsform ist es vorgesehen, diese Ergebnisse automatisch zu speichern und/oder in Textform und/oder graphisch darzustellen.

In einer Ausführungsform des Verfahrens ist es vorgesehen, dass die mindestens eine Fahrt mit gespeichert vorliegenden Testfahrtdaten simuliert wird. Diese können beispielsweise in einer Datenbank mit gespeicherten CAN-Bus-Daten verschiedener gespeicherter Testfahrten vorgehalten werden. In dieser Ausführungsform kann auch die Kurvenlicht-Steuereinheit von einer nicht an Bord eines Fahrzeugs befindlichen programmierbaren Einrichtung, z. B. eines stationären Computers ausgeführt werden.

Gemäß einem zweiten Aspekt der Erfindung umfasst ein Beleuchtungssystem für ein Fahrzeug, mit automatisch selbst optimierender prädiktiver dynamischer Kurvenlichtfunktion eine Fahrscheinwerfereinrichtung, dazu ausgelegt, in Reaktion auf Steuersignale eine Beleuchtungsausrichtung der Fahrscheinwerfereinrichtung zu verändern, eine Kurvenlicht-Steuereinheit, verbunden mit der Fahrscheinwerfereinrichtung, eingerichtet mit initialen Kurvenlicht-Steuerparameterwerten als zu verwendende Kurvenlicht-Steuerparameterwerte und dazu ausgelegt, Steuersignale zum Steuern der Beleuchtungsausrichtung an die Fahrscheinwerfereinrichtung zu senden, eine mit der Kurvenlicht-Steuereinheit verbundene Klassifizierungseinheit, eingerichtet zum automatischen Klassifizieren eines Leistungsverhaltens der Kurvenlicht-Steuereinheit in eine gewünschte Leistungsverhaltensklasse und mindestens eine weitere Leistungsverhaltensklasse in Abhängigkeit von Ausgabewerten der Kurvenlicht-Steuereinheit, eine mit der Kurvenlicht-Steuereinheit und der Klassifizierungseinheit verbundene Steuerparameter-Optimierungseinheit zum Ermitteln von aktualisierten Kurvenlicht-Steuerparameterwerten in Abhängigkeit von Eingangswerten der Kurvenlicht-Steuereinheit und den Eingangswerten zugeordneten Klassifizierungen des Leistungsverhaltens der Kurvenlicht-Steuereinheit, und eine Fahrtverlaufsparametererfassungseinrichtung, eingerichtet zum Erfassen von Fahrtverlaufsparameterwerten und Übertragen der Fahrtverlaufsparameterwerte als Eingangswerte der Kurvenlicht-Steuereinheit während mindestens einer Fahrt des Fahrzeugs, wobei das Beleuchtungssystem dazu eingerichtet ist, ein Verfahren zum automatischen Optimieren einer prädiktiven dynamischen Kurvenlichtfunktion gemäß dem ersten Aspekt der Erfindung durchzuführen. Somit werden die Vorteile und Besonderheiten des erfindungsgemäßen Verfahrens zum automatischen Optimieren einer prädiktiven dynamischen Kurvenlichtfunktion eines Beleuchtungssystems eines Fahrzeugs, einschließlich jeder seiner Ausführungsformen, auch im Rahmen eines geeigneten Beleuchtungssystems für ein Fahrzeug, mit automatisch selbst optimierender prädiktiver dynamischer Kurvenlichtfunktion umgesetzt.

In einer bevorzugten Ausführungsform umfasst das Beleuchtungssystem eine programmierbare Einrichtung, die zumindest einen Prozessor und einen Speicher aufweist, wobei die Kurvenlicht-Steuereinheit, die Klassifizierungseinheit und die Steuerparameter-Optimierungseinheit vom Prozessor ausführbare Module sind, und wobei der Speicher Codeanteile enthält, die, wenn sie vom Prozessor geladen werden, diesen veranlassen, die Module auszuführen und das Verfahren durchzuführen.

Gemäß einem dritten Aspekt der Erfindung umfasst ein Fahrzeug ein Beleuchtungssystem gemäß dem zweiten Aspekt der Erfindung, und gemäß einem vierten Aspekt der Erfindung umfasst zudem ein Computerprogrammprodukt Codeanteile, die, wenn sie von einem Speicher in einen Prozessor einer programmierbaren Einrichtung eines Beleuchtungssystems für ein Fahrzeug, mit automatisch selbst optimierender prädiktiver dynamischer Kurvenlichtfunktion, geladen werden, diese einrichten, ein Verfahren gemäß dem ersten Aspekt der Erfindung auszuführen. Somit werden die Vorteile und Besonderheiten des erfindungsgemäßen Verfahrens zum automatischen Optimieren einer prädiktiven dynamischen Kurvenlichtfunktion eines Beleuchtungssystems eines Fahrzeugs, einschließlich jeder seiner Ausführungsformen, auch im Rahmen eines Fahrzeugs mit einem zum Durchführen des Verfahrens geeigneten Beleuchtungssystem mit automatisch selbst optimierender prädiktiver dynamischer Kurvenlichtfunktion, sowie im Rahmen eines Computerprogrammprodukts zum Einrichten des Beleuchtungssystems zur Durchführung des Verfahrens zum automatischen Optimieren einer prädiktiven dynamischen Kurvenlichtfunktion eines Beleuchtungssystems eines Fahrzeugs umgesetzt.

Weitere Vorteile der vorliegenden Erfindung sind aus der detaillierten Beschreibung und den Abbildungen ersichtlich. Die Erfindung wird nachstehend auch im Zusammenhang mit der folgenden Beschreibung von Ausführungsbeispielen mit Bezug auf die begleitenden Abbildungen näher erläutert. Es zeigen:
- Fig. 1: eine schematische Darstellung eines Beispiels eines Verfahrens zum automatischen Optimieren einer prädiktiven dynamischen Kurvenlichtfunktion eines Beleuchtungssystems eines Fahrzeugs gemäß einer Ausführungsform der Erfindung; und
- Fig. 2: eine schematische Darstellung eines Beispiels eines Fahrzeugs mit einem Beleuchtungssystem mit automatisch selbst optimierender prädiktiver dynamischer Kurvenlichtfunktion gemäß einer weiteren Ausführungsform der Erfindung.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der vorstehend und nachstehend beschriebenen verschiedenen beispielhaften Ausführungsformen miteinander kombiniert werden können, sofern nicht spezifisch anders angegeben. Die Beschreibung ist deshalb nicht in einschränkendem Sinne aufzufassen, und der Schutzumfang der vorliegenden Erfindung wird durch die angefügten Ansprüche definiert.

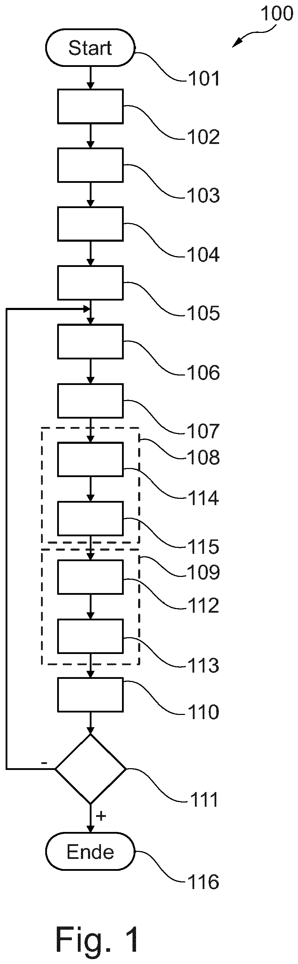

In Fig. 1 wird eine schematische Darstellung eines Beispiels eines Verfahrens 100 zum automatischen Optimieren einer prädiktiven dynamischen Kurvenlichtfunktion eines Beleuchtungssystems eines Fahrzeugs gemäß einer Ausführungsform der Erfindung gezeigt. Das Verfahren 100 beginnt in einem Startzustand 101 als Beginn einer Fahrt mit dem Fahrzeug, das über das Beleuchtungssystem verfügt, dessen prädiktive dynamische Kurvenlichtfunktion optimiert werden soll. In der gezeigten Ausführungsform erfolgt nun zunächst jedoch ein Durchführen 102 einer Trainingsphase, in der ein künstliches neuronales Netz einer Klassifizierungseinheit zum automatischen Klassifizieren eines Leistungsverhaltens einer Kurvenlicht-Steuereinheit in eine gewünschte Leistungsverhaltensklasse und mindestens eine weitere Leistungsverhaltensklasse in Abhängigkeit von Ausgabewerten der Kurvenlicht-Steuereinheit mit einem Maschinenlernverfahren trainiert wird, das zumindest Werte einer Fahrgeschwindigkeit des Fahrzeugs, eines Lenkwinkels des Lenkrads des Fahrzeugs und einer Ausrichtung von Fahrscheinwerfern des Fahrzeugs auswertet. In einer anderen Ausführungsform ist das künstliche neuronale Netz bereits trainiert. Dabei kann das Training mit demselben Fahrzeug und demselben Fahrer, aber auch mit einem anderen Fahrzeug und/oder einem anderen Fahrer oder fahrzeugunabhängig anhand in einer Datenbank gespeicherter Testfahrt-Datensätze erfolgt sein.

Nun erfolgen Schritte des Einrichtens 103 einer Kurvenlicht-Steuereinheit zum Steuern des Beleuchtungssystems des Fahrzeugs, mit initialen Kurvenlicht-Steuerparameterwerten als zu verwendende Kurvenlicht-Steuerparameterwerte, des Einrichtens 104 einer (mit der Kurvenlicht-Steuereinheit verbundenen) Klassifizierungseinheit zum automatischen Klassifizieren eines Leistungsverhaltens der Kurvenlicht-Steuereinheit in eine gewünschte Leistungsverhaltensklasse und mindestens eine weitere Leistungsverhaltensklasse in Abhängigkeit von Ausgabewerten der Kurvenlicht-Steuereinheit, sowie des Einrichtens 105 einer Steuerparameter-Optimierungseinheit zum Ermitteln von aktualisierten Kurvenlicht-Steuerparameterwerten in Abhängigkeit von Eingangswerten der Kurvenlicht-Steuereinheit und den Eingangswerten zugeordneten Klassifizierungen des Leistungsverhaltens der Kurvenlicht- Steuereinheit.

In einem weiteren Schritt erfolgt ein Erfassen 106 von Fahrtverlaufsparameterwerten als die Eingangswerte der Kurvenlicht-Steuereinheit während mindestens einer Fahrt des Fahrzeugs, gefolgt von Schritten des Ermittelns 107 von Ausgabewerten der Kurvenlicht-Steuereinheit und des automatisches Klassifizierens 108 des Leistungsverhaltens der Kurvenlicht-Steuereinheit in Abhängigkeit von den ermittelten Ausgabewerten während der mindestens einen Fahrt. In der gezeigten Ausführungsform umfasst das ein Verwenden 114 des trainierten künstlichen neuronalen Netzes sowie zusätzlich ein Zuordnen 115 eines Vertrauensniveaus zu dem jeweils klassifizierten Leistungsverhalten.

Das Verfahren wird nun mit dem Ermitteln 109 von aktualisierten Kurvenlicht-Steuerparameterwerten fortgesetzt. Dies umfasst in der in Fig. 1 gezeigten Ausführungsform ein Durchführen 112 einer Metamodellierung der automatischen Klassifizierung in Abhängigkeit von den zu verwendenden Kurvenlicht-Steuerparameterwerten und gespeicherten früheren zu verwendenden Kurvenlicht-Steuerparameterwerten, um eine multidimensionale Optimierung unter Verwendung des genetischen Algorithmus durchführen zu können, sowie das Anwenden 113 eines genetischen Algorithmus, mit dem eine Häufigkeit einer Klassifizierung des Leistungsverhaltens der Kurvenlicht-Steuereinheit in der gewünschten Leistungsverhaltensklasse vergrößert wird. Die gespeicherten früheren zu verwendenden Kurvenlicht-Steuerparameterwerte sind dabei bei vorangegangenen Iterationen der Ermittlung von aktualisierten Kurvenlicht-Steuerparameterwerten basierend auf Klassifizierungen anhand von Ausgabewerten der Kurvenlicht-Steuereinheit von früheren Zeitabschnitten der aktuell durchgeführten Fahrt und/oder während vorangegangener Fahrten desselben oder eines anderen Fahrzeugs ermittelt worden. Zumindest wenn auf diese Weise noch keine früheren zu verwendenden Kurvenlicht-Steuerparameterwerte ermittelt wurden, können beispielsweise zufällige oder vorzugsweise z. B. unter Verwendung des Latin Hypercube Stichprobenverfahrens als geeignet ermittelte Kurvenlicht-Steuerparameterwerte als frühere zu verwendende Kurvenlicht-Steuerparameterwerte aus dem Parameterraum ausgewählt werden. Liegen keine früheren zu verwendenden Kurvenlicht-Steuerparameterwerte vor, erfolgt noch keine Metamodellierung.

Vorzugsweise umfasst dies in der gezeigten Ausführungsform, eine globale Optimierung mit einem nichtdominierten genetischen Sortieralgorithmus unter Verwendung von mit der Metamodellierung erzeugten Modellen durchzuführen. Zudem umfasst das Durchführen 112 der Metamodellierung, zunächst eine Datenbereinigung und -aufbereitung für die Metamodellierung vorzunehmen.

Nach dem Ermitteln 109 von aktualisierten Kurvenlicht-Steuerparameterwerten erfolgt dann ein Anpassen 110 der zu verwendenden Kurvenlicht-Steuerparameterwerte an die aktualisierten Kurvenlicht-Steuerparameterwerte, beispielsweise während der mindestens einen Fahrt.

In einem Schritt des Überprüfens 111, ob das Optimieren der prädiktiven dynamischen Kurvenlichtfunktion enden soll, wird überprüft, ob ein zugeordnetes Abbruchkriterium erfüllt ist. Das Kriterium ist z. B. erfüllt, wenn die Kurvenlicht-Steuereinheit oder das Beleuchtungssystem oder das Fahrzeug deaktiviert werden. Es kann auch vorgesehen sein, das Optimieren nach dem Ende der Fahrt zu beenden, wobei ebenso möglich ist, das Optimieren über eine Mehrzahl von Fahrten fortzusetzen. Es kann auch vorgesehen sein, das Optimieren zu beenden, wenn die jeweils neu ermittelten aktualisierten Kurvenlicht-Steuerparameterwerte (ggf. innerhalb eines Toleranzbereichs) nicht mehr von den bis dahin gültigen zu verwendenden Kurvenlicht-Steuerparameterwerten abweichen. Es kann auch vorgesehen sein, dass eine finale Testfahrt das Optimieren beendet, wobei das Steuern der Beleuchtungssteuerung einer Qualitätsprüfung unterzogen wird, beispielsweise durch einen Experten. Je nach Ausführungsform kann das Abbruchkriterium z. B. eines der zuvor genannten oder eine Kombination aus mehreren davon sein.

Ergibt das Überprüfen 111, dass das Optimieren nicht enden soll (in Fig. 1 mit einem "-" gekennzeichnet), wird das Verfahren fortgesetzt mit dem Erfassen 106 von weiteren Fahrtverlaufsparameterwerten. Ergibt das Überprüfen 111, dass das Optimieren enden soll (in Fig. 1 mit einem "+" gekennzeichnet), geht das Verfahren in einen Endzustand 116 über.

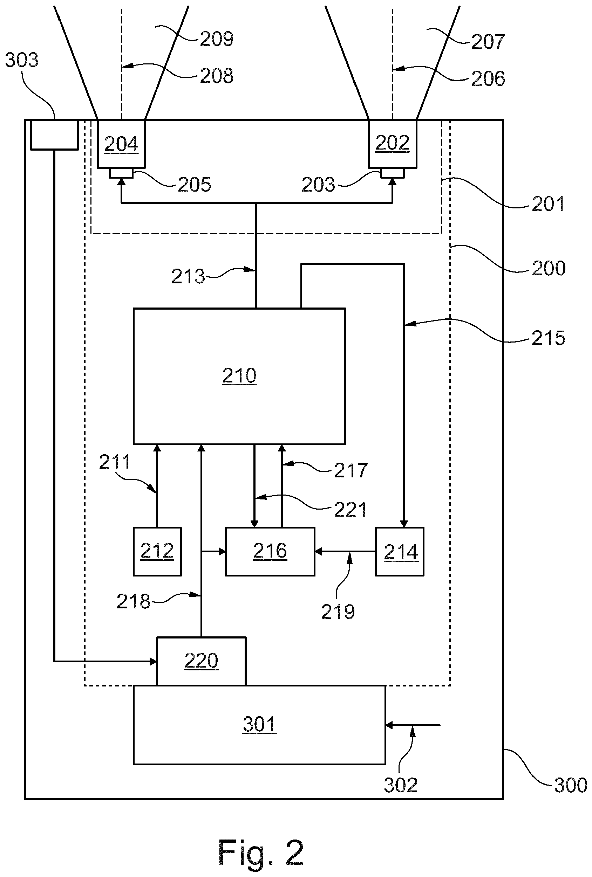

In Fig. 2 wird eine schematische Darstellung eines Beispiels eines Fahrzeugs 300 mit einem Beleuchtungssystem 200 mit automatisch selbst optimierender prädiktiver dynamischer Kurvenlichtfunktion gemäß einer weiteren Ausführungsform der Erfindung gezeigt. Das Fahrzeug 300 umfasst neben dem Beleuchtungssystem 200 insbesondere einen Fahrzeug-Bus, in der gezeigten Ausführungsform einen CAN-Bus 301, über den Fahrtverlaufsparameterwerte 302 empfangen werden können. Dabei handelt es sich um den Fahrtverlauf (einschließlich den Betriebszustand des Fahrzeugs während der Fahrt) charakterisierende Werte von Sensorsignalen, die mit jeweils geeigneten Sensoren aufgenommen werden, beispielsweise um den Verlauf des Lenkwinkels des Lenkrades des Fahrzeugs, die Fahrzeuggeschwindigkeit, die Gierrate, den eingelegten Gang und/oder den Zustand des Fahrtrichtungsanzeigers. Videoaufnahmen einer Frontkamera 303, die in der gezeigten Ausführungsform über ein Videoanalysemodul, d. h. eine programmierbare Einrichtung verfügt, die dazu eingerichtet ist, aus den Videoaufnahmen den Fahrbahnverlauf zu ermitteln, liefern weitere Fahrtverlaufsparameterwerte, entweder auch über den CAN-Bus 301 des Fahrzeugs 300 oder, wie in Fig. 1 gezeigt, direkt an eine Fahrtverlaufsparametererfassungseinrichtung 220 des Beleuchtungssystems 200. Die Fahrtverlaufsparametererfassungseinrichtung 220 umfasst insbesondere eine Schnittstelle, um vom CAN-Bus 301 die Fahrtverlaufsparameterwerte 302 zu empfangen.

Das gezeigte Beleuchtungssystem 200 des Fahrzeugs verfügt über eine automatisch selbst optimierende prädiktive dynamische Kurvenlichtfunktion. Dies beinhaltet, dass eine Fahrscheinwerfereinrichtung 201 dazu ausgelegt ist, in Reaktion auf Steuersignale 213 einer Kurvenlicht-Steuereinheit 210 eine Beleuchtungsausrichtung 206, 208, d. h. eine Leuchtrichtung, der Fahrscheinwerfereinrichtung 201 zu verändern. In der in Fig. 1 gezeigten Ausführungsform verfügt die Fahrscheinwerfereinrichtung 201 über einen drehbar gelagerten rechten Fahrscheinwerfer 202, verbunden mit einem ersten Antriebsmotor 203, und über einen drehbar gelagerten linken Fahrscheinwerfer 204, verbunden mit einem zweiten Antriebsmotor 205, wobei die Antriebsmotoren 203, 205 die Steuersignale 213 empfangen und dazu ausgelegt sind, den rechten Fahrscheinwerfer 202 und den linken Fahrscheinwerfer 204 in Abhängigkeit von den Steuersignalen 213 jeweils um einen Winkel zu drehen, um die Ausleuchtung der Fahrbahn durch den ersten Lichtkegel 207 mit der ersten Beleuchtungsausrichtung 206 des rechten Fahrscheinwerfers 202 und den zweiten Lichtkegel 209 mit der zweiten Beleuchtungsausrichtung 208 des linken Fahrscheinwerfers 204 zu verbessern, wenn das Fahrzeug 300 durch eine Kurve fährt. In einem weiteren (nicht gezeigten) Ausführungsbeispiel sind die Fahrscheinwerfer 202, 204 nicht unbedingt drehbar gelagert und mit Antriebsmotoren 203, 205 schwenkbar, sondern umfassen ein Matrixsystem aus einer Mehrzahl von LEDs sowie eine Steuerung, um die Beleuchtungsausrichtung 206, 208 durch angepasstes Aktivieren und Deaktivieren von LEDs in angesteuerten Segmenten des Matrixsystems zu ändern.

Das Beleuchtungssystem weist zudem die Kurvenlicht-Steuereinheit 210 auf, die dazu ausgelegt ist, die Steuersignale 213 zum Steuern der Beleuchtungsausrichtung 206, 208 des rechten und des linken Fahrscheinwerfers 202, 204 an den ersten und den zweiten Antriebsmotor 203, 205 der Fahrscheinwerfereinrichtung 201 zu senden. Dazu ist die Kurvenlicht-Steuereinheit 210 verbunden mit der Fahrscheinwerfereinrichtung 201 und initialisiert mit initialen Kurvenlicht-Steuerparameterwerten 211 als zu verwendende Kurvenlicht-Steuerparameterwerte. Die initialen Kurvenlicht-Steuerparameterwerte können in einer Trainingsphase ermittelt werden oder bereits vorab ermittelt worden sein und in einem Speicher 212 vorliegen, um von der Kurvenlicht-Steuereinheit 210 geladen zu werden.

Mit der Kurvenlicht-Steuereinheit 210 ist außerdem eine als KI-Einheit implementierte Klassifizierungseinheit 214 verbunden, die eingerichtet, z. B. programmiert, ist zum automatischen Klassifizieren eines Leistungsverhaltens der Kurvenlicht-Steuereinheit 210 in eine gewünschte Leistungsverhaltensklasse und mindestens eine weitere Leistungsverhaltensklasse in Abhängigkeit von Ausgabewerten 215 der Kurvenlicht-Steuereinheit 210. Je nach Format der Steuersignale 213 können die Ausgabewerte 215 der Kurvenlicht-Steuereinheit 210 mit den Steuersignalen 213 identisch sein oder ein anderes Format haben, das aber die Steuersignale charakterisiert (beispielsweise Drehwinkelangaben anstatt Aktivierungsdauern der Antriebsmotoren).

Das Beleuchtungssystem 200 weist zudem eine mit der Kurvenlicht-Steuereinheit 210 und der Klassifizierungseinheit 214 verbundene Steuerparameter-Optimierungseinheit 216 zum Ermitteln von aktualisierten Kurvenlicht-Steuerparameterwerten 217 in Abhängigkeit von den Eingangswerten 218 der Kurvenlicht-Steuereinheit 210 und den Eingangswerten 218 zugeordneten Klassifizierungen 219 des Leistungsverhaltens der Kurvenlicht-Steuereinheit 210 in die jeweiligen Leistungsverhaltensklassen auf. Zudem ist die Fahrtverlaufsparametererfassungseinrichtung 220 eingerichtet zum Erfassen von Fahrtverlaufsparameterwerten 302. Die Fahrtverlaufsparametererfassungseinrichtung 220 umfasst eine Schnittstelle zum CAN-Bus 301 des Fahrzeugs 300, über den und außerdem ggf. direkt von einer Frontkamera 303 des Fahrzeugs 300, Fahrtverlaufsparameterwerte 302 empfangen werden, die als Eingangswerte der Kurvenlicht-Steuereinheit 210 während der Fahrt des Fahrzeugs an diese und (direkt oder indirekt) auch an die Steuerparameter-Optimierungseinheit 216 gesendet werden.

In einer Ausführungsform ist vorgesehen, dass die Kurvenlicht-Steuereinheit 210, die Klassifizierungseinheit 214 und die Steuerparameter-Optimierungseinheit 216 als Schaltkreise und/oder mit Hilfe von programmierbaren Logikschaltkreisen implementiert werden. In einer weiteren Ausführungsform ist vorgesehen, dass das Beleuchtungssystem 200 eine programmierbare Einrichtung aufweist, die zumindest einen Prozessor und einen Speicher, z. B. den Speicher 220, aufweist, wobei die Kurvenlicht-Steuereinheit 210, die Klassifizierungseinheit 214 und die Steuerparameter-Optimierungseinheit 216 (ganz oder teilweise) vom Prozessor ausführbare Module sind, und der Speicher Codeanteile, d. h. Programmcode, enthält, die, wenn sie vom Prozessor geladen werden, diesen veranlassen, die Module auszuführen und das Beleuchtungssystem 200 einrichten, das im Zusammenhang mit Fig. 1 beschriebene Verfahren 100 zum automatischen Optimieren einer prädiktiven dynamischen Kurvenlichtfunktion durchzuführen.

Es versteht sich, dass Verfahrensschritte, obwohl gemäß einer gewissen geordneten Reihenfolge beschrieben, zum Teil in einer anderen als der hier beschriebenen Reihenfolge ausgeführt werden könnten. Es versteht sich weiterhin, dass gewisse Schritte gleichzeitig oder nacheinander, einfach oder mehrfach durchgeführt werden können, dass andere Schritte hinzugefügt werden könnten oder dass gewisse, hier beschriebene Schritte weggelassen werden könnten. Mit anderen Worten: Es werden die vorliegenden Beschreibungen zum Zwecke der Veranschaulichung bestimmter Ausführungsformen bereitgestellt und sollten nicht als Beschränkung des offenbarten Gegenstands aufgefasst werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Die Erfindung soll daher nicht auf einzelne Ausführungsformen beschränkt sein, sondern lediglich durch die beigefügten Ansprüche.

### Bezugszeichenliste

- 100: Verfahren
- 101: Start
- 102: Durchführen einer Trainingsphase
- 103: Einrichten einer Kurvenlicht-Steuereinheit
- 104: Einrichten einer Klassifizierungseinheit
- 105: Einrichten einer Steuerparameter-Optimierungseinheit
- 106: Erfassen von Fahrtverlaufsparameterwerten
- 107: Ermitteln von Ausgabewerten der Kurvenlicht-Steuereinheit
- 108: automatisches Klassifizieren
- 109: Ermitteln von aktualisierten Kurvenlicht-Steuerparameterwerten
- 110: Anpassen der zu verwendenden Kurvenlicht-Steuerparameterwerte
- 111: Überprüfen, ob das Optimieren enden soll
- 112: Durchführen einer Metamodellierung
- 113: Anwenden eines genetischen Algorithmus
- 114: Verwenden eines trainierten künstlichen neuronalen Netzes
- 115: Zuordnen eines Vertrauensniveaus
- 116: Ende
- 200: Beleuchtungssystem
- 201: Fahrscheinwerfereinrichtung
- 202: drehbar gelagerter rechter Fahrscheinwerfer
- 203: erster Antriebsmotor für Drehung des rechten Fahrscheinwerfers
- 204: drehbar gelagerter linker Fahrscheinwerfer
- 205: zweiter Antriebsmotor für Drehung des linken Fahrscheinwerfers
- 206: erste Beleuchtungsausrichtung
- 207: erster Lichtkegel
- 208: zweite Beleuchtungsausrichtung
- 209: zweiter Lichtkegel
- 210: Kurvenlicht-Steuereinheit
- 211: initiale Kurvenlicht-Steuerparameterwerte
- 212: Speicher
- 213: Steuersignale
- 214: Klassifizierungseinheit
- 215: Ausgabewerte der Kurvenlicht-Steuereinheit
- 216: Steuerparameter-Optimierungseinheit
- 217: aktualisierte Kurvenlicht-Steuerparameterwerte
- 218: Eingangswerte der Kurvenlicht-Steuereinheit
- 219: Klassifizierungen
- 220: Fahrtverlaufsparametererfassungseinrichtung
- 221: zu verwendende Kurvenlicht-Steuerparameterwerte
- 300: Fahrzeug
- 301: CAN-Bus
- 302: Fahrtverlaufsparameterwerte
- 303: Frontkamera mit Videoanalysemodul

## Patentansprüche

1. Verfahren (100) zum automatischen Optimieren einer prädiktiven dynamischen Kurvenlichtfunktion eines Beleuchtungssystems eines Fahrzeugs, umfassend
- Einrichten (103) einer Kurvenlicht-Steuereinheit zum Steuern eines Beleuchtungssystems eines Fahrzeugs, mit initialen Kurvenlicht-Steuerparameterwerten als zu verwendende Kurvenlicht-Steuerparameterwerte;
- Einrichten (104) einer Klassifizierungseinheit zum automatischen Klassifizieren eines Leistungsverhaltens der Kurvenlicht-Steuereinheit in eine gewünschte Leistungsverhaltensklasse und mindestens eine weitere Leistungsverhaltensklasse in Abhängigkeit von Ausgabewerten der Kurvenlicht-Steuereinheit;
- Einrichten (105) einer Steuerparameter-Optimierungseinheit zum Ermitteln von aktualisierten Kurvenlicht-Steuerparameterwerten in Abhängigkeit von Eingangswerten der Kurvenlicht-Steuereinheit und den Eingangswerten zugeordneten Klassifizierungen des Leistungsverhaltens der Kurvenlicht-Steuereinheit;
- Erfassen (106) von Fahrtverlaufsparameterwerten als die Eingangswerte der Kurvenlicht-Steuereinheit während mindestens einer Fahrt des Fahrzeugs;
- Ermitteln (107) von Ausgabewerten der Kurvenlicht-Steuereinheit und automatisches Klassifizieren (108) des Leistungsverhaltens der Kurvenlicht-Steuereinheit in Abhängigkeit von den ermittelten Ausgabewerten während der mindestens einen Fahrt; und
- Ermitteln (109) von aktualisierten Kurvenlicht-Steuerparameterwerten und Anpassen (110) der zu verwendenden Kurvenlicht-Steuerparameterwerte an die aktualisierten Kurvenlicht-Steuerparameterwerte, wobei das Ermitteln (109) von aktualisierten Kurvenlicht-Steuerparameterwerten umfasst, einen genetischen Algorithmus anzuwenden (113), mit dem eine Häufigkeit einer Klassifizierung des Leistungsverhaltens der Kurvenlicht-Steuereinheit in der gewünschten Leistungsverhaltensklasse vergrößert wird.

2. Verfahren nach Anspruch 1, wobei das Ermitteln (109) von aktualisierten Kurvenlicht-Steuerparameterwerten und das Anpassen (110) der zu verwendenden Kurvenlicht-Steuerparameterwerte an die aktualisierten Kurvenlicht-Steuerparameterwerte während der mindestens einen Fahrt erfolgt.

3. Verfahren nach Anspruch 1 oder Anspruch 2, wobei das Ermitteln (109) von aktualisierten Kurvenlicht-Steuerparameterwerten ein Durchführen (112) einer Metamodellierung der automatischen Klassifizierung in Abhängigkeit von den zu verwendenden Kurvenlicht-Steuerparameterwerten und gespeicherten früheren zu verwendenden Kurvenlicht-Steuerparameterwerten umfasst.

4. Verfahren nach Anspruch 3, wobei das Anwenden (113) des genetischen Algorithmus umfasst, eine globale Optimierung mit einem nichtdominierten genetischen Sortieralgorithmus unter Verwendung von mit der Metamodellierung erzeugten Modellen durchzuführen.

5. Verfahren nach einem der vorhergehenden Ansprüche, wobei das automatische Klassifizieren (108) ein Verwenden (114) eines trainierten künstlichen neuronalen Netzes umfasst.

6. Verfahren nach Anspruch 5, wobei das künstliche neuronale Netz beim Durchführen (102) einer Trainingsphase mit einem Maschinenlernverfahren trainiert wird, das zumindest Werte einer Fahrgeschwindigkeit des Fahrzeugs, eines Lenkwinkels des Lenkrads des Fahrzeugs und einer Ausrichtung von Fahrscheinwerfern des Fahrzeugs auswertet.

7. Verfahren nach Anspruch 6, wobei beim Durchführen (102) der Trainingsphase Testfahrtdaten sowie zugehörige manuelle Klassifizierungen des Leistungsverhaltens durch Experten ausgewertet werden.

8. Verfahren nach Anspruch 6 oder Anspruch 7, wobei das Maschinenlernverfahren für jede der Leistungsverhaltensklassen der Klassifizierungseinheit ein zugeordnetes Maschinenlernmodell verwendet.

9. Verfahren nach einem der vorhergehenden Ansprüche, wobei die gewünschte Klasse eine korrekte Reaktion der Kurvenlicht-Steuereinheit betrifft und die mindestens eine weitere Klasse eine erste und eine zweite weitere Klasse umfasst, wobei die erste weitere Klasse eine verzögerte Reaktion der Kurvenlicht-Steuereinheit betrifft und die zweite weitere Klasse eine instabile Reaktion der Kurvenlicht-Steuereinheit betrifft.

10. Verfahren nach einem der vorhergehenden Ansprüche, wobei das automatische Klassifizieren (108) umfasst, dem jeweils klassifizierten Leistungsverhalten außerdem ein Vertrauensniveau zuzuordnen (115).

11. Verfahren nach einem der vorhergehenden Ansprüche, wobei die mindestens eine Fahrt mit gespeichert vorliegenden Testfahrtdaten simuliert wird.

12. Beleuchtungssystem (200) für ein Fahrzeug (300), mit automatisch selbst optimierender prädiktiver dynamischer Kurvenlichtfunktion, umfassend
- eine Fahrscheinwerfereinrichtung (201), dazu ausgelegt, in Reaktion auf Steuersignale eine Beleuchtungsausrichtung (206, 208) der Fahrscheinwerfereinrichtung (201) zu verändern;
- eine Kurvenlicht-Steuereinheit (210), verbunden mit der Fahrscheinwerfereinrichtung (201), eingerichtet mit initialen Kurvenlicht-Steuerparameterwerten (211) als zu verwendende Kurvenlicht-Steuerparameterwerte und dazu ausgelegt, Steuersignale (213) zum Steuern der Beleuchtungsausrichtung (206, 208) an die Fahrscheinwerfereinrichtung (201) zu senden;
- eine mit der Kurvenlicht-Steuereinheit (210) verbundene Klassifizierungseinheit (214), eingerichtet zum automatischen Klassifizieren eines Leistungsverhaltens der Kurvenlicht-Steuereinheit (210) in eine gewünschte Leistungsverhaltensklasse und mindestens eine weitere Leistungsverhaltensklasse in Abhängigkeit von Ausgabewerten (215) der Kurvenlicht-Steuereinheit (210);
- eine mit der Kurvenlicht-Steuereinheit (210) und der Klassifizierungseinheit (214) verbundene Steuerparameter-Optimierungseinheit (216) zum Ermitteln von aktualisierten Kurvenlicht-Steuerparameterwerten (217) in Abhängigkeit von Eingangswerten (218) der Kurvenlicht-Steuereinheit (210) und den Eingangswerten (218) zugeordneten Klassifizierungen (219) des Leistungsverhaltens der Kurvenlicht-Steuereinheit (210); und
- eine Fahrtverlaufsparametererfassungseinrichtung (220), eingerichtet zum Erfassen von Fahrtverlaufsparameterwerten (302) und Übertragen der Fahrtverlaufsparameterwerte (302) als Eingangswerte (218) der Kurvenlicht-Steuereinheit (210) während mindestens einer Fahrt des Fahrzeugs (300), wobei das Beleuchtungssystem (200) dazu eingerichtet ist, ein Verfahren (100) zum automatischen Optimieren einer prädiktiven dynamischen Kurvenlichtfunktion gemäß einem der Ansprüche 1 bis 11 durchzuführen.

13. Beleuchtungssystem nach Anspruch 12, umfassend eine programmierbare Einrichtung, die zumindest einen Prozessor und einen Speicher aufweist, wobei die Kurvenlicht-Steuereinheit (210), die Klassifizierungseinheit (214) und die Steuerparameter-Optimierungseinheit (216) vom Prozessor ausführbare Module sind, wobei der Speicher Codeanteile enthält, die, wenn sie vom Prozessor geladen werden, diesen veranlassen, die Module auszuführen und das Verfahren (100) durchzuführen.

14. Fahrzeug (300), umfassend ein Beleuchtungssystem (200) nach Anspruch 12 oder Anspruch 13.

15. Computerprogrammprodukt, umfassend Codeanteile, die, wenn sie von einem Speicher in einen Prozessor einer programmierbaren Einrichtung eines Beleuchtungssystems (200) für ein Fahrzeug (300), mit automatisch selbst optimierender prädiktiver dynamischer Kurvenlichtfunktion, geladen werden, diese einrichten, ein Verfahren (100) gemäß einem der Ansprüche 1 bis 11 auszuführen.

## Claims

1. Method (100) for automatically optimizing a predictive dynamic bending light function of a lighting system of a vehicle, comprising
- configuring (103) a bending light control unit for controlling a lighting system of a vehicle with initial bending light control parameter values as bending light control parameter values to be used;
- configuring (104) a classification unit for automatically classifying a performance of the bending light control unit into a desired performance class and at least one further performance class, depending on output values of the bending light control unit;
- configuring (105) a control parameter optimization unit for ascertaining updated bending light control parameter values depending on input values of the bending light control unit and classifications of the performance of the bending light control unit assigned to the input values;
- acquiring (106) journey trajectory parameter values as the input values of the bending light control unit during at least one journey of the vehicle;
- ascertaining (107) output values of the bending light control unit, and automatically classifying (108) the performance of the bending light control unit depending on the ascertained output values during the at least one journey; and
- ascertaining (109) updated bending light control parameter values, and adapting (110) the bending light control parameter values to be used to the updated bending light control parameter values, wherein
the ascertainment (109) of updated bending light control parameter values comprises the application (113) of a genetic algorithm with which a frequency of a classification of the performance of the bending light control unit into the desired performance class is increased.

2. Method according to Claim 1, wherein the ascertainment (109) of updated bending light control parameter values, and the adaptation (110) of the bending light control parameter values to be used to the updated bending light control parameter values, takes place during the at least one journey.

3. Method according to Claim 1 or Claim 2, wherein the ascertainment (109) of updated bending light control parameter values comprises a performance (112) of a metamodelling of the automatic classification depending on the bending light control parameter values to be used and stored, previous, bending light control parameter values to be used.

4. Method according to Claim 3, wherein the application (113) of the genetic algorithm comprises performing a global optimization with a non-dominated genetic sorting algorithm, using models generated with the metamodeling.

5. Method according to one of the preceding claims, wherein the automatic classification (108) comprises use (114) of a trained artificial neural network.

6. Method according to Claim 5, wherein the artificial neural network is trained while performing (102) a training phase with a machine learning method that evaluates at least values of a driving speed of the vehicle, of a steering angle of the steering wheel of the vehicle, and of an alignment of driving headlamps of the vehicle.

7. Method according to Claim 6, wherein test journey data, as well as associated manual classifications of the performance, are evaluated by experts when performing (102) the training phase.

8. Method according to Claim 6 or Claim 7, wherein the machine learning method uses an assigned machine learning model for each of the performance classes of the classification unit.

9. Method according to one of the preceding claims, wherein the desired class relates to a correct reaction of the bending light control unit, and the at least one further class comprises a first and a second further class, wherein the first further class relates to a delayed reaction of the bending light control unit, and the second further class relates to an unstable reaction of the bending light control unit.

10. Method according to one of the preceding claims, wherein the automatic classification (108) also comprises assigning (115) a trust level to the respectively classified performance.

11. Method according to one of the preceding claims, wherein the at least one journey is simulated with stored available test journey data.

12. Lighting system (200) for a vehicle (300), with automatically self-optimizing predictive dynamic bending light function, comprising
- a driving headlamp apparatus (201) designed to change an illumination direction (206, 208) of the driving headlamp apparatus (201) in response to control signals;
- a bending light control unit (210) connected to the driving headlamp apparatus (201), configured with initial bending light control parameter values (211) as bending light control parameter values to be used, and designed to transmit control signals (213) for controlling the illumination direction (206, 208) to the driving headlamp apparatus (201);
- a classification unit (214), connected to the bending light control unit (210), configured for automatically classifying a performance of the bending light control unit (210) into a desired performance class and at least one further performance class, depending on output values (215) of the bending light control unit (210);
- a control parameter optimization unit (216), connected to the bending light control unit (210) and the classification unit (214), for ascertaining updated bending light control parameter values (217) depending on input values (218) of the bending light control unit (210) and classifications (219) of the performance of the bending light control unit (210) assigned to the input values (218); and
- a journey trajectory parameter acquisition apparatus (220) configured to acquire journey trajectory parameter values (302) and to transmit the journey trajectory parameter values (302) as input values (218) to the bending light control unit (210) during at least one journey of the vehicle (300), wherein the lighting system (200) is configured to perform a method (100) for automatically optimizing a predictive dynamic bending light function according to one of Claims 1 to 11.

13. Lighting system according to Claim 12, comprising a programmable apparatus comprising at least one processor and a memory, wherein the bending light control unit (210), the classification unit (214) and the control parameter optimization unit (216) are modules that can be executed by the processor, wherein the memory contains code components which, when loaded by the processor, cause this to execute the modules and to perform the method (100).

14. Vehicle (300) comprising a lighting system (200) according to Claim 12 or Claim 13.

15. Computer program product comprising code components which, when loaded from a memory into a processor of a programmable apparatus of a lighting system (200) for a vehicle (300) with automatically self-optimizing predictive dynamic bending light function, configure this to execute a method (100) according to one of Claims 1 to 11.

## Revendications

1. Procédé (100) d'optimisation automatique d'une fonction de feu de virage dynamique prédictive d'un système d'éclairage d'un véhicule, ledit procédé comprenant les étapes suivantes
- concevoir (103) une unité de commande de feu de virage afin de commander un système d'éclairage d'un véhicule, les valeurs de paramètres de commande de feu de virage utilisés étant des valeurs initiales de paramètres de commande de feu de virage ;
- concevoir (104) une unité de classification afin de classer automatiquement un comportement de performance de l'unité de commande de feu de virage dans une classe de comportement de performance souhaitée et au moins une autre classe de comportement de performance en fonction des valeurs de sortie de l'unité de commande de feu de virage ;
- concevoir (105) une unité d'optimisation de paramètres de commande afin de déterminer des valeurs de paramètres de commande de feu de virage actualisées en fonction de valeurs d'entrée de l'unité de commande de feu de virage et de classifications, associées aux valeurs d'entrée, du comportement de performance de l'unité de commande de feu de virage ;
- acquérir (106) des valeurs de paramètres d'allure de trajet comme valeurs d'entrée de l'unité de commande de feu de virage pendant au moins un trajet du véhicule ;
- déterminer (107) des valeurs de sortie de l'unité de commande de feu de virage et classer automatiquement (108) le comportement de performance de l'unité de commande de feu de virage en fonction des valeurs de sortie déterminées pendant l'au moins un trajet ; et
- déterminer (109) des valeurs de paramètres de commande de feu de virage actualisés et adapter (110) les valeurs de paramètres de commande de feu de virage à utiliser aux valeurs de paramètres de commande de feu de virage actualisées,
la détermination (109) de valeurs de paramètres de commande de feu de virage actualisées comprenant l'application d'un algorithme génétique (113) qui permet d'augmenter une fréquence de classification du comportement de performance de l'unité de commande de feu de virage dans la classe de comportement de performance souhaitée.

2. Procédé selon la revendication 1, la détermination (109) de valeurs de paramètres de commande de feu de virage actualisées et l'adaptation (110) des valeurs de paramètres de commande de feu de virage à utiliser aux valeurs de paramètres de commande de feu de virage actualisées étant effectuées pendant au moins un trajet.

3. Procédé selon la revendication 1 ou la revendication 2, la détermination (109) de valeurs de paramètres de commande de feu de virage actualisée comprenant la réalisation (112) d'une méta-modélisation de la classification automatique en fonction des valeurs de paramètres de commande de feu de virage à utiliser et des valeurs de paramètres de commande de feu de virage à utiliser précédentes qui ont été mémorisées.

4. Procédé selon la revendication 3, l'application (113) de l'algorithme génétique comprenant la réalisation d'une optimisation globale avec un algorithme de tri génétique non dominé à l'aide de modèles générés avec la méta-modélisation.

5. Procédé selon l'une des revendications précédentes, la classification automatique (108) comprenant l'utilisation (114) d'un réseau neuronal artificiel entraîné.

6. Procédé selon la revendication 5, le réseau neuronal artificiel étant entraîné lors de la réalisation (102) d'une phase d'entraînement avec un procédé d'apprentissage automatique qui évalue au moins des valeurs d'une vitesse de roulement du véhicule, d'un angle de braquage du volant du véhicule et d'une orientation de phares du véhicule.

7. Procédé selon la revendication 6, des données de roulement de test et des classifications manuelles associées du comportement de performance étant évaluées par des experts lors de la réalisation (102) de la phase d'entraînement.

8. Procédé selon la revendication 6 ou la revendication 7, le procédé d'apprentissage automatique utilisant un modèle d'apprentissage automatique associé pour chacune des classes de performance de l'unité de classification.

9. Procédé selon l'une des revendications précédentes, la classe souhaitée concernant une réaction correcte de l'unité de commande de feu de virage et l'au moins une autre classe comprenant une première et une deuxième classe supplémentaire, la première classe supplémentaire concernant une réaction retardée de l'unité de commande de feu de virage et la deuxième classe supplémentaire concernant une réaction instable de l'unité de commande de feu de virage.

10. Procédé selon l'une des revendications précédentes, la classification automatique (108) comprenant en outre l'association d'un niveau de confiance (115) au comportement de performance respectivement classé.

11. Procédé selon l'une des revendications précédentes, l'au moins un trajet étant simulé avec des données de roulement de test existantes qui ont été mémorisées.

12. Système d'éclairage (200) destiné à un véhicule (300) et pourvu d'une fonction de feu de virage dynamique prédictif à auto-optimisation automatique, ledit système d'éclairage comprenant
- un dispositif de phare (201) conçu pour modifier une orientation d'éclairage (206, 208) du dispositif de phare de route (201) en réponse à des signaux de commande ;
- une unité de commande de feu de virage (210), reliée au dispositif de phare de route (201), conçue avec des valeurs initiales de paramètres de commande de feu de virage (211) comme valeurs de paramètres de commande de feu de virage à utiliser et configurée pour envoyer des signaux de commande (213) afin de commander l'orientation d'éclairage (206, 208) au dispositif de phare de route (201) ;
- une unité de classification (214) reliée à l'unité de commande de feu de virage (210), conçue pour classer automatiquement un comportement de performance de l'unité de commande de feu de virage (210) dans une classe de comportement de performance souhaitée et au moins une autre classe de comportement de performance en fonction de valeurs de sortie (215) de l'unité de commande de feu de virage (210) ;
- une unité d'optimisation de paramètres de commande (216) reliée à l'unité de commande de feu de virage (210) et à l'unité de classification (214) et destinée à déterminer des valeurs de paramètres de commande de feu de virage actualisés (217) en fonction de valeurs d'entrée (218) de l'unité de commande de feu de virage (210) et de classifications (219), associées aux valeurs d'entrée (218), du comportement de performance de l'unité de commande de feu de virage (210) ; et
- un dispositif d'acquisition de paramètres d'allure de trajet (220) conçu pour détecter des valeurs des paramètres d'allure de trajet (302) et transmettre les valeurs des paramètres d'allure de trajet (302) comme valeurs d'entrée (218) de l'unité de commande de feu de virage (210) pendant au moins un trajet du véhicule (300), le système d'éclairage (200) étant conçu pour mettre en œuvre un procédé (100) d'optimisation automatique d'une fonction de feu de virage dynamique prédictive selon l'une des revendications 1 à 11.

13. Système d'éclairage selon la revendication 12, comprenant un dispositif programmable qui comporte au moins un processeur et une mémoire, l'unité de commande de feu de virage (210), l'unité de classification (214) et l'unité d'optimisation de paramètres de commande (216) étant des modules qui peuvent être exécutés par le processeur, la mémoire contenant des parties de code qui, lorsqu'elles sont chargées par le processeur, amènent celui-ci à exécuter les modules et à mettre en œuvre le procédé (100).

14. Véhicule (300), comprenant un système d'éclairage (200) selon la revendication 12 ou la revendication 13.

15. Produit de programme informatique, comprenant des parties de code qui, lorsqu'elles sont chargées, depuis une mémoire, dans un processeur d'un dispositif programmable d'un système d'éclairage (200) destiné à un véhicule (300), avec une fonction de feu de virage dynamique prédictive à auto-optimisation automatique, font en sorte que ladite fonction mette en œuvre un procédé (100) selon l'une des revendications 1 à 11.
